# EUROPÄISCHE PATENTSCHRIFT

(11) **EP 2 096 806 B1**
(45) Veröffentlichungstag und Bekanntmachung des Hinweises auf die Patenterteilung: **13.04.2011**
(21) Anmeldenummer: 08102035.6
(22) Anmeldetag: 26.02.2008
(51) Int. Cl.: H04L 12/56

(54) **Verfahren und Kommunikationssystem zur Realisierung von IP transparenten drahtlosen, multi-hop Maschennetzwerken mit Mobilitätsunterstützung**
Method and communication system for realising IP transparent wireless multi-hop mesh networks with mobility support
Procédé et système de communication destinés à la réalisation de réseaux maillés IP transparents, sans fil, à plusieurs bonds dotés d'un soutien de mobilité

(43) Veröffentlichungstag der Anmeldung: 02.09.2009
(73) Patentinhaber: Deutsche Telekom AG, 53113 Bonn (DE)
(72) Erfinder: Xu, Bangnan, 64295 Darmstadt (DE); Sivchenko, Dimitri, 35390 Giessen (DE); Bayer, Nico, 53113 Bonn (DE)
(74) Vertreter: 2K Patentanwälte Blasberg Kewitz & Reichel

(56) Entgegenhaltungen:
- US-A1- 2006 256 741
- CLAUSEN T ET AL: "Optimized Link State Routing Protocol (OLSR); rfc3626.txt" IETF STANDARD, INTERNET ENGINEERING TASK FORCE, IETF, CH, 1. Oktober 2003 (2003-10-01), XP015009408 ISSN: 0000-0003

## Beschreibung

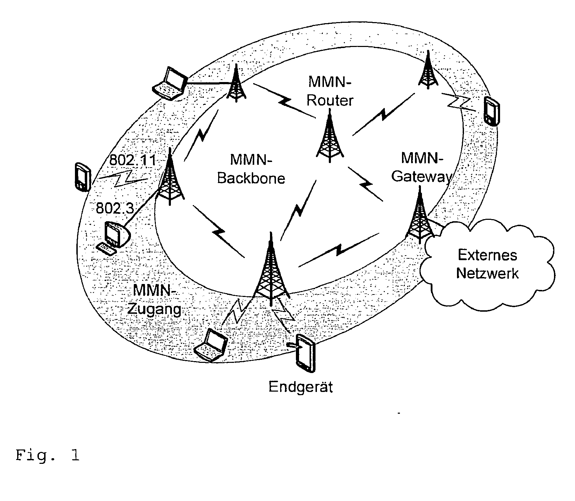

Die Bedeutung drahtloser multi-hop Netzwerke im Mobilfunkbereich steigt derzeit stetig an. Ein möglicher Stand der Technik ist aus der Patentschrift US 2006/0256741 bekannt. Als eine Weiterentwicklung der mobilen ad hoc Netzwerke (MANETs) bieten die drahtlosen, multi-riop Maschennetze (MMN) für Telekommunikationsanbieter eine Reihe von Vorteilen im Vergleich zu traditionellen Netzwerken. Beispielsweise reduzieren diese Netze die notwendige Kabelinfrastruktur und können daher unter anderem schnell, flexibel und kostengünstig aufgebaut werden. In Fig. 1 ist die allgemeine Struktur eines solchen MMN dargestellt.

Prinzipiell kann man ein solches Netzwerk in einen MMN-Backbone und einen MMN-Zugang unterteilen. Der MMN-Backbone wird von den MMN-Knoten gebildet. Jeder dieser Knoten verfügt über eine Backbone-Netzwerkschnittstelle, mit deren Hilfe der Knoten mit den anderen MMN-Knoten kommunizieren kann. Prinzipiell kann man die MMN-Knoten weiter in MMN-Router und MMN-Gateways unterteilen. Der Unterschied zwischen den beiden Typen liegt darin, dass MMN-Gateways zusätzlich über eine Netzwerkschnittstelle verfügen, die die Verbindung zu externen Netzen sicherstellt und damit beispielsweise eine Verbindung ins Internet ermöglicht. Der MMN-Zugang des MMN wird von den Zugangs-Netzwerkschnittstellen gebildet, die auf den MMN-Knoten installiert sein können. Diese Schnittstellen werden für die Anbindung von Endgeräten verwendet. Sowohl für die Backbone- als auch für die Zugangs-Netzwerkschnittstelle stehen verschiedene Technologien zur Verfügung, z.B. IEEE 802.11abg, IEEE 802.16, etc.

Die MMN-Knoten müssen über bestimmte Funktionalitäten verfügen, z.B. Unterstützung eines Routing Protokolls, das für die multi-hop Kommunikation im MMN-Backbone notwendig ist. Aufgrund der Entkopplung von MMN-Zugang und MMN-Backbone müssen die Engeräte, die über die Zugangsschnittstelle eines MMN-Routers an das Netzwerk angebunden sind, keine zusätzlichen Funktionalitäten aufweisen, da sich das MMN wie ein normaler Zugangspunkt der jeweiligen Zugangstechnologie verhält.

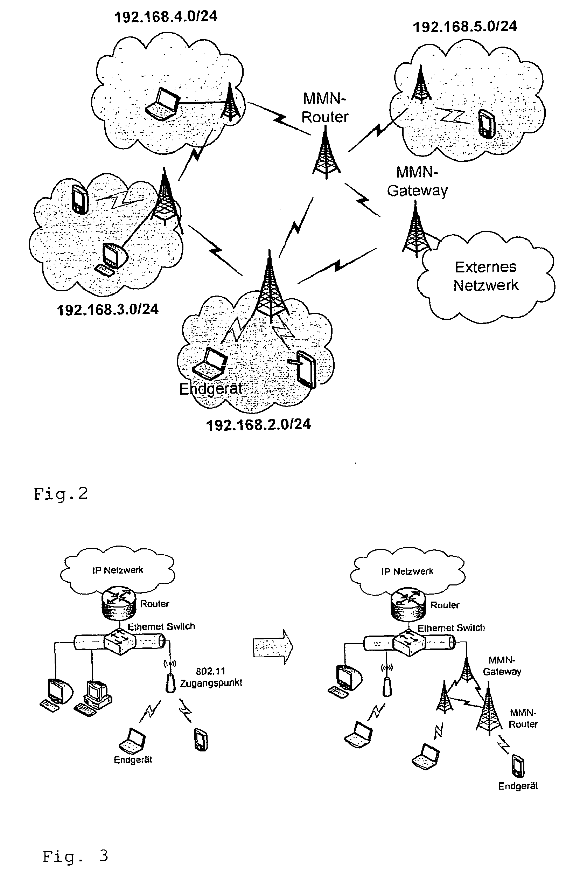

Routing Protokolle spielen in MMNs eine sehr wichtige Rolle, da sie die multi-hop-Kommunikation im MMN-Backbone sicherstellen. Sie können aufgrund ihrer prinzipiellen Funktionsweise in proaktiv (z.B. Optimized Link State Routing - OLSR [1]) bzw. reaktiv (z.B. Dynamic Source Routing - DSR [3], Ad-hoc On-demand Distance Vector - AODV [2]) unterteilt werden. Grundsätzlich wird in multi-hop Netzwerken aber IPbasiertes Routing verwendet. Mit Hilfe des Routing Protokolls wird entschieden, über welchen Hop (über welchen MMN-Knoten in der direkten Nachbarschaft) die Ziel IP-Adresse zu erreichen ist. Die IP-Adresse der Senke dient dabei als eine eindeutige Identifizierung, die notwendig ist, um die IP-Datenpakete durch ein multi-hop Maschennetz zu übertragen. Für eine erfolgreiche Paketübertragung wird vorausgesetzt, dass jedes Datenpaket eine gültige IP Zieladresse in dem IP-Header beinhaltet. Dies wiederum setzt voraus, dass jedes an das MMN angeschlossene Endgerät eine eindeutige IP-Adresse besitzt. In derzeitigen MMN Lösungen spannt dazu jede Zugangs-Netzwerkschnittstelle eines MMN-Routers ein eigenes IP-Subnetz auf, siehe Figur 2. Innerhalb dieses Subnetzes kann der MMN-Knoten mit Hilfe von DHCP (Dynamic Host Configuration Protocol [6], im Falle das Internet Protokoll Version 4, IPv4, verwendet wird) IP-Adressen an die angeschlossenen Endgeräte vergeben. Durch diese topologisch korrekte Adresse wird die IP-Konnektivität der Endgeräte mit anderen IP Teilnehmern gewährleistet.

Der oben beschriebene aktuelle Status vorhandener MMN Lösungen hat entscheidende Nachteile. Das erste Problem besteht in der Übertragung von Paketen, die zu Protokollen gehören, die unterhalb der IP-Schicht laufen und daher keinen IP-Header beinhalten, z.B. Address Resolution Protocol (ARP [4]) oder Neighbour Discovery Protocol (NDP [5]). Da aktuelle MMN Lösungen Pakete innerhalb eines Maschennetzes anhand der IP Zieladresse weiterleiten, können diese Pakete nicht über mehrere Hops übertragen werden.

Zwar gibt es Tunnel- und Proxy-ARP Lösungen (z.B. [12]), die dieses Problem entschärfen können, allerdings erfordern diese einen hohen Konfigurationsaufwand und machen daher den Aufbau solcher Netze unflexibel.

Das zweite Problem bisheriger Ansätze besteht in einer ungenügenden Unterstützung von Mobilität der Endgeräte. Mobilitätsunterstützung spielt in multi-hop Maschennetzen aber eine große Rolle, um die Kundenzufriedenheit und Akzeptanz solcher Netze zu erhöhen. Mobilitätsunterstützung erweitert die Einsatzmöglichkeiten eines Maschennetzes, indem es mobilen Endgeräten ermöglicht, sich zwischen verschiedenen MMN-Knoten zu bewegen, ohne dabei aktive Datenverbindungen unterbrechen. Da bei derzeitigen Lösungen jeder MMN-Router ein eigenes IP Subnetz für jede Zugangs-Schnittstelle aufspannt, muss die IP-Adresse eines mobilen Endgerätes geändert werden, wenn dieses ein so genanntes "Handover" zwischen zwei Zugangspunkten durchführt. Mobilitätsansätze auf der NetzwerkSchicht (Mobile IPv4 [7]) oder höherer Schichten (HIP [9], SIP [8], SCTP [10]) müssen angewendet werden, um die ununterbrochene Konnektivität zwischen den mobilen Endgeräten und anderen IP Teilnehmern zu gewährleisten. Aufgrund der Verzögerungen, die durch die Konfiguration einer neuen IP-Adresse, z.B. durch DHCP entsteht, ist eine nahtlose Mobilität allerdings nicht gewährleistet. Auch die bereits oben erwähnten Tunnel- bzw. Proxy-Lösungen unterstützen Mobilität nur unzureichend.

Bisherige Layer-2 Mesh Routing Protokolle, die beispielsweise innerhalb der IEEE Standards 802.16 und 802.11s entwickelt wurden, sind so ausgelegt, dass sie an den jeweiligen Standard angepasst sind und daher in der Hardware (Netzwerkschnittstellen-Karte) integriert sein werden. Daher können diese Protokolle nur innerhalb eines auf der jeweiligen Technologie basierenden Maschennetzwerkes eingesetzt werden. Solche Maschennetzwerke können somit mit den MMN-Knoten, die auf einer anderen Technologie basieren, nicht erweitert werden. Das bedeutet, dass Hardware unterschiedlicher Hersteller bzw. unterschiedlicher Standards miteinender nicht kompatibel ist.

Die oben beschriebenen Limitierungen des heutigen Standes der Technik fordern teilweise komplizierte Konfigurationen von MMN-Knoten, besonders bei der Erweiterung eines existierenden multi-hop Maschennetzes, was dessen Ausbau wesentlich verlangsamt und damit den Aufwand aber auch die Kosten erhöht. Weiterhin treten bei der Anwendung von Mobilitätsprotokollen höherer Schichten große Handoverzeiten auf, die einen unterbrechungsfreien Wechsel des Zugangspunkts nicht im gewährleisten können. Dies liegt darin begründet, dass nach einem Handover zuerst eine neue IP-Adresse konfiguriert und eventuell eine neue Route durch das multi-hop Maschennetz aufgebaut werden muss. Die Handoververzögerung kann somit mehrere Sekunden betragen, was ein unakzeptabler Wert für die mobilen Kunden sein kann, besonders im Falle von zeitkritischen Anwendungen wie z.B. Voice over IP (VoIP) oder Videokonferenz.

### Überblick über die Erfindung:

Die vorliegende Anmeldung beschreibt ein Verfahren und ein Kommunikationssystem, um die oben beschriebenen Probleme des Standes der Technik zu beseitigen. Mit dem vorgeschlagenen Verfahren kann ein so genanntes Plug-and-Play MMN realisiert werden, das für die Nutzer wie eine Einheit von mehreren direkt an das Subnetz angeschlossenen Zugangspunkten aussieht, und transparent gegenüber der IP-Schicht fungiert.

Gelöst wird diese Aufgabe durch ein Verfahren und eine Vorrichtung mit den Merkmalen der unabhängigen Ansprüche. Eine entsprechende grafische Darstellung kann man Fig. 3 entnehmen.

Die grundlegende Idee der Erfindung besteht in einer neuen Paketvermittlungseinheit, die zwischen den MAC und IP Schichten eingesetzt ist und die die Datenpakete anhand von Quelle- und Senke-Hardware-Adressen bearbeitet. Informationen darüber, wie ein Paket von der Paketvermittlungseinheit bearbeitet werden muss, werden in einer Mesh-Forwarding Table/Tabelle (MFT) gespeichert. Die in der MFT gespeicherten Daten können nur von einer MFT-Verwaltungseinheit kontrolliert (gelöscht, hinzugefügt und geändert) werden. Der zweite Kernpunkt dieser Erfindung beschreibt ein Verfahren zum Aufbau und der Pflege der MFT.

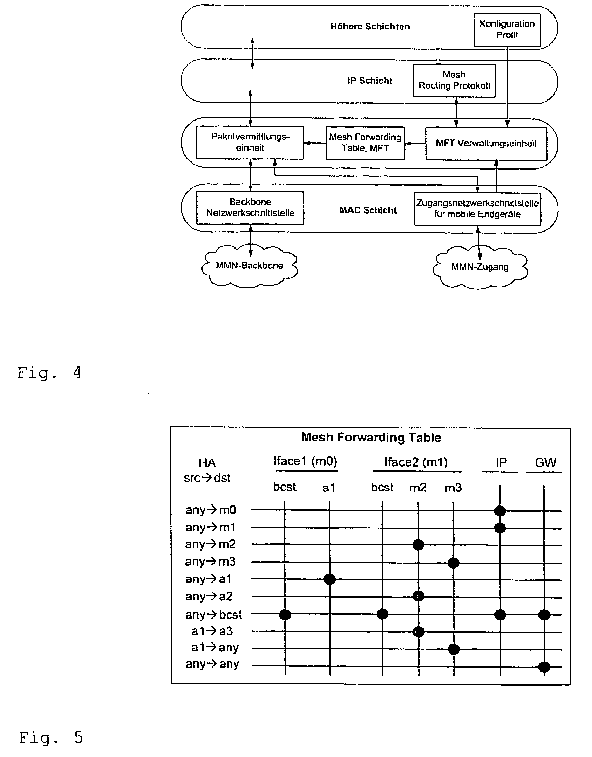

Die Paketvermittlungseinheit bearbeitet die Datenpakete anhand der in jedem Paket beinhalteten Layer-2 Adressen. Fig. 4 zeigt die Skizze eines beispielhaften MMN-Knoten, in dem das neue Verfahren eingesetzt ist.

Der abgebildete Maschenknoten besitzt zwei Netzwerkschnittstellen. Mithilfe einer Backbone-Netzwerkschnittstelle kann der Knoten mit benachbarten Maschenknoten über das MMN-Backbone kommunizieren. Die Zugangs-Netzwerkschnittstelle dient zur Anbindung mobiler Knoten im MMN-Zugangsnetzwerk.

Das Hauptelement der neuen Knotenarchitektur, die Paketvermittlungseinheit, kann die Datenpakete von/zu allen Netzwerkschnittstellen und von/zu der IP-Schicht des MMN-Knotens (MMN-Knoten selber) empfangen/übertragen werden. Somit kann die Vermittlungseinheit die Datenpakete zwischen allen Netzwerkschnittstellen inklusive dem MMN-Knoten selber (IP-Schicht) übertragen. Die für das Weiterleiten von Datenpaketen benötigte Information über den nächsten Hop in Richtung der Paket-Senke wird in der Mesh-Forwarding Table (MFT) gespeichert. Die MFT ist auf allen MMN-Knoten vorhanden und beinhaltet die Hardware-Adressen (MAC Adressen) der Netzwerkschnittstellen, von mobilen Endgeräten aber auch MMN-Knoten, die für die Datenübertragung verwendet werden. Die Modifizierung der MFT Daten erfolgt durch die MFT Verwaltungseinheit entsprechend der neuen Verwaltungslogik und wird durch unterschiedliche Ereignisse getriggert. Dies können sowohl Ereignisse des im MMN verwendeten Routing Protokolls aber auch Ereignisse der MAC Schicht der Zugangs-Netzwerkschnittstelle, das für die Anbindung der mobilen Endgeräte an einen MMN-Knoten verwendet wird, sein. Dies ermöglicht eine sehr schnelle Adaptation des Routings innerhalb des Maschennetzes zur aktuellen Position der mobilen Endknoten. Somit wird die Handoververzögerung wesentlich reduziert. Um die aktuelle Information über die Position der mobilen Knoten schneller an andere MMN-Knoten zu übergeben, kann die MFT-Verwaltungseinheit das Mesh Routing Protokoll triggern, damit es eine zusätzliche Signalisierungsnachricht generiert. Die zu übermittelnden Datenpakete können entweder von der höheren Schicht kommen (MMN-Knoten generiert das Paket selber), oder über eine Netzwerkschnittstelle empfangen sein (MMN-Knoten leitet das Paket weiter oder das Paket ist an den MMN-Knoten adressiert). Die Pakete können entweder über eine Netzwerkschnittstelle verschickt werden oder an die höhere Schicht übergeben werden (MMN-Knoten ist der Empfänger des Pakets) oder auch beides zusammen (z.B. für empfangene broadcast Pakete). Das Konfigurations-Profil beinhaltet die Einstellungen, die von einem Systemadministrator vorgenommen werden. Das sind die Informationen über interne IP-Adressen der MMN-Knoten im MMN-Backbone, die Information, ob ein MMN-Knoten als MMN-Gateway fungiert und falls ja, welche Netzwerkschnittstelle dafür verwendet wird und mit welchen Parametern.

Durch das Einsetzen des neuen Verfahrens ergeben sich die folgenden Vorteile gegenüber dem aktuellen Stand der Technik:
- Pakete, die zu Protokollen gehören, die unterhalb der IP-Schicht laufen, können innerhalb des MMN weitergeleitet werden, z.B.: ARP, NDP, etc.
- Verwendung einer zentralen Adressvergabe (DHCP Server) für das gesammte MMN ist möglich. Teilweise sehr komplizierte Verteilung von vorhandenen IP-Adressen zwischen einzelnen MMN-Knoten wird somit vermieden.
- Beim Wechsel des Zugangspunktes von mobilen Endgeräten, ist keine Neukonfiguration der IP-Adresse erforderlich. Somit können Handoverzeiten reduziert und Mobilität besser unterstützt werden, da Mobilitätsprotokolle höherer Schichten (z.B. MobileIP) nicht benötigt werden.
- Durch die verwendeten Trigger der MAC-Schicht und des Mesh Routing Protokolls können Informationen über Positionsänderungen mobiler Knoten schnell zwischen den MMN-Knoten eines Maschennetzes ausgetauscht werden. Dies beschleunigt die Aktualisierung der Routen und reduziert somit wesentlich die Handoverzeiten.
- Im Vergleich zu Layer-2 Routing Protokollen ist die in dieser Erfindung beschriebene Lösung Technologie-unabhängig sodass das den Aufbau heterogener Maschennetze, basierend auf unterschiedlichen Technologien, ermöglicht. Die vorhandene Hardware kann weiterverwendet werden, da die vorgeschlagene Lösung als ein Software-Treiber realisiert werden kann.
- Im Vergleich zu Tunnel/ARP-Proxy Lösungen benötigt das in dieser Erfindung beschriebene Verfahren minimalen Konfigurationsaufwand, was die Verwaltungskosten eines Maschennetzes stark reduziert, insbesondere bei der Erweiterung eines existierten Netzwerkes.

### Figurenbeschreibung:

Im Folgenden werden die Figuren kurz beschrieben. Es zeigt:
- Fig. 1: Allgemeines multi-hop Maschennetz
- Fig. 2: Netzarchitektur eines multi-hop Maschennetzes mit mehreren IP-Domänen
- Fig. 3:: Verwenden eines Plug-and-Play multi-hop Maschennetzes
- Fig. 4:: Routing Struktur eines Maschenknotens
- Fig. 5: Struktur einer Mesh-Forwarding Table (MFT)
- Fig. 6: Verwaltung der MFT
- Fig. 7: Re-Senden eines broadcast Datenpakets über die Backbone-Netzwerkschnittstelle
- Fig 8: Beispielszenario mit dem eingesetzten MFT basierten Routing
- Fig 9: MFTs auf MMN-Knoten nach dem Starten
- Fig 10: MFTs auf MMN-Knoten nach dem Starten mobiler Endgeräte
- Fig 11: MFTs auf MMN-Knoten nach der Mobilität des mobilen Endgerätes m1

### Detaillierte Beschreibung der Ausführungsformen:

Figur 5 stellt die allgemeine Struktur einer Mesh-Forwarding Table (MFT) dar, die eines der Hauptelemente der Erfindung ist. Die grafische Darstellung dient dem besseren Verständnis der MFT Funktionsweise. Die Form bzw. Speicherung der Tabellendaten ist abhängig von der Implementierung und kann von System zu System variieren. Prinzipiell besteht die MFT aus Spalten und Reihen. Mithilfe der Reihen können Pakete anhand deren Quell- und Senke-Hardwareadresse identifiziert werden. Die Spalten der MFT geben an, wie mit den Paketen weiter verfahren werden soll.

Die Identifikation eines Dateneintrages (oder, einer Datenreihe) in der MFT basiert auf dem Quelle->Senke Hardware-Adressen Paar. Jedes zu übertragende Datenpaket beinhaltet die Hardware-Quelle- und Senke-Adressen. In Ethernet basierten kabelgebundenen Netzwerken (IEEE 802.3) beispielsweise sind dies die MAC-Adressen der Netzwerkschnittstellen des Senders und des Empfängers. Die Verwendung des Quelle->Senke Hardware-Adressen Paars ermöglicht eine sehr flexible und vielfältige Erzeugung von Übertragungsmöglichkeiten eines Datenpaketes durch das Netzwerk. Grundsätzlich kann für die Reihenidentifikation auch nur die Ziel-Adresse verwendet werden, aber auch detailliertere Unterscheidungsmerkmale sind denkbar, z.B. spezifische Felder in IP, UDP und/oder TCP Headern. Somit kann man nicht nur Knoten-spezifische, sondern auch applikationsspezifische Routen durch das multi-hop Maschennetz erzeugen.

Die MFT-Spalten zeigen an, welche Möglichkeiten es gibt, ein Paket weiter zu behandeln. Jede auf dem MMN-Knoten vorhandene Netzwerkschnittstelle wird in die MFT als eine Netzwerkschnittstellen-Spalte eingetragen. In dem Beispiel in Fig. 5 besitzt der MMN-Knoten zwei Netzwerkschnittstellen, Iface1 und Iface2 mit den entsprechenden Hardware-Adressen, m0 und m1.

Zusätzlich hat jeder MMN-Knoten eine sogenannte IP-Spalte, die anzeigt, dass ein empfangenes Paket an den MMN-Knoten selber adressiert ist und somit an die höheren Schichten (IP, ARP, usw.) zur Verarbeitung weitergegeben wird.

Eine GW-Spalte ist nur auf den MMN-Gateways vorhanden und stellt die kabelgebundene Netzwerkschnittstelle dar, die für das Weiterleiten der Datenpakete aus dem multi-hop Maschenetzes in ein weiteres kabelgebundenes Netzwerk dient.

Jede Netwerkschnittstellen-Spalte beinhaltet eine oder mehrere Unterspalten mit den Hardware-Adressen der Knoten, die sich in direkter (1-hop) Nachbarschaft der entsprechenden Netzwerkschnittstelle befinden. Diese Spalten zeigen an, welcher dieser Nachbarn als next-Hop verwendet werden kann, um einen dritten MMN-Knoten zu erreichen, der sich in der 2-hop Nachbarschaft befindet. Im Beispiel in Figur 5 besitzt die Netzwerkschnittstelle Iface1 einen direkten Nachbar mit der Hardware-Adresse a1, die Nachbarn mit Hardware-Adressen m2 und m3 können über die Netzwerkschnittstelle Iface2 erreicht werden.

Weiterhin besitzt jede Netzwerkschnittstellen-Spalte in der MFT eine Unterspalte mit der Broadcast Hardware-Adresse. Dies ist die broadcast Adresse der jeweiligen Kommunikationstechnologie, die verwendet wird, um sicherzustellen, dass ein versendetes Paket von jedem, an den entsprechenden Link, angebundenen Knoten empfangen wird.

Die MFT wird auf jedem Knoten nach dem Einschalten des Gerätes erzeugt. Direkt danach beinhaltet die MFT nur die Spalten der gefundenen Netzwerkschnittstellen, mit der jeweiligen broadcast Unterspalte. Weiterhin existiert die Reihe any->bcst, die für broadcast Datenpakete genutzt wird.

Auf jedem MMN-Knoten wird zusätzlich eine MFT-Datenreihe any->any beim Starten des Computers (auf dem MMN-Gateway) oder später von der MFT-Verwaltungseinheit kreiert. Auf einem MMN-Knoten beinhaltet dieser Dateneintrag die Information über den nächsten Hop (MMN-Knoten) in Richtung des MMN-Gateways. Auf einem MMN-Gateway beinhaltet dieser Dateneintrag die Information über die Netzwerkschnittstelle, die für die Anbindung des multi-hop Maschennetzes an die weiteren IP-Netzwerke verwendet wird. Im Beispiel in Figur 5 bezeichnet die Spalte GW die kabelgebundene Netzwerkschnittstelle, die für das Weiterleiten der Datenpakete aus dem multi-hop Maschenetz in ein weiteres kabelgebundenes Netzwerk dient.

Falls eine Netzwerkschnittstelle aus- oder eingeschaltet wird, wird die entsprechende Spalte entweder zur MFT hinzugefügt oder von der MFT gelöscht. Die Verwaltung der MFT, so wie die Erzeugung von neuen Unterspalten und neuen Datenreihen mit Paaren von Hardware-Adressen vom Typ Quelle->Senke wird von der MFT-Verwaltungseinheit gesteuert, die die ankommenden Ereignisse von dem in dem multi-hop Maschennetzwerk verwendeten Routing Protokoll oder von dem für die Anbindung der normalen Knoten verwendete Zugangs-Netzwerkschnittstelle auswertet.

Die MFT zeigt also an, wie mit einem empfangenen Paket mit einer bestimmten Quelle-Senke-Adressen Kombination weiter verfahren werden soll. Ein schwarzer Punkt zeigt an, welche Aktion für jedes Adresspaar gültig ist. Diese Information wird aus der MFT ausgelesen und verwendet, um ein Datenframe der jeweiligen Übertragungstechnologie aufzubauen und an den nächsten oder die nächsten Hops zu verschicken. Eine MFT-Datenreihe kann Informationen über mehrere nächste Hops (mehrere Hardware-Adressen) beinhalten. In diesem Fall wird das Paket vervielfältigt, und an alle nächsten Hops geschickt, auf die die entsprechende MFT Datenreihe verweist.

Somit werden im Beispiel in Figur 5 alle Datenpakete des Knotens mit der Hardware-Adresse (HA) al (Quell-Adresse), die an den Knoten mit der HA a3 (Senke-Adresse) adressiert sind, über den MMN-Knoten mit der HA m2 verschickt. Die existierenden MFT-Paare Quelle->Senke werden vom Anfang zum Ende hintereinander durchsucht, bis eine Übereinstimmung zwischen den Daten im Datenpaket und den MFT Dateneintrag gefunden wird.

Im Folgenden wird die Verwaltung einer Mesh Forwarding Table beschrieben.

Die grundlegende Funktionalität eines Routing Protokolls für multi-hop Maschennetze liegt darin, Informationen über sich und über die angeschlossenen Knoten bzw. über die Knoten, die über einen bestimmten MMN-Knoten erreicht werden können, in das multi-hop Maschennetz zu senden. Die Information über die Linkqualität, die Anzahl von Hops zu einem Knoten, die Information ob ein MMN-Knoten ein MMN-Gateway ist, usw. kann in Signalisierungsnachrichten zusätzlich enthalten sein. Aufgrund dieser Information werden von dem Routing Protokoll die logischen Routen zu bestimmten Knoten berechnet. Die Regeln, wie die Routen zwischen bestimmten Knoten aufgebaut sind, hängt von der Logik des jeweiligen Routing Protokolls ab und ist nicht Bestandteil dieser Anmeldung. Wie oben schon erwähnt, werden in aktuellen Routing Protokollen die Routen basierend auf den IP-Adressen einzelner IP-Hosts bzw. IP-Subnetze, die den MMN-Knoten zugeordnet werden können, berechnet.

Um das hier beschriebene Verfahren zu realisieren, wird die eindeutige Identifizierung der MMN-Knoten bzw. der Endgeräte von IP-Adresse auf Hardware-Adresse umgestellt. Die Funktionsweise der Routing-Protokolle wird dadurch nicht geändert. Anstatt der Information über die IP-Adressen der Knoten, die in einem multi-hop Maschennetz vorhanden sind, wird die Information über deren Hardware-Adressen übermittelt. Für die späteren Erklärungen werden die grundlegenden Informationen, die in den Signalisierungsnachrichten eines Routing Protokolls übertragen, und an die MFT-Verwaltungseinheit übergeben werden, wie folgt definiert:
One-hop Nachbarn
   - Info_neighbour[Iface, ha, GW]: der MMN-Knoten mit der Hardware-Adresse ha ist in dem Maschennetz präsent und ist ein direkter Nachbar des lokalen Knotens. Das GW Flag signalisiert, ob dieser MMN-Knoten ein MMN-Gateway ist oder nicht. Iface beinhaltet die Information über die Netzwerkschnittstelle über die diese Nachricht empfangen wurde. Dieses Ereignis wird z.B. nach Empfang von HELLO Signalisierungsnachrichten in OLSR [1] und AODV [2] ausgelöst und an die MFT-Verwaltungseinheit übergeben.
Reachability Informationen
   - Info_reachability[Iface, ha_r, ha, GW]: der Knoten mit der Hardware-Adresse ha_r kann über den MMN-Knoten mit der Hardware-Adresse ha erreicht werden. Dabei kann ha_r entweder die HA eines mobilen über einen MMN-Knoten angebundenen Knotens oder eines MMN-Knotens selbst sein. Das GW Flag signalisiert, ob der MMN-Knoten ha als nächster Hop in Richtung MMN-Gateway verwendet werden soll. Die Entscheidung darüber trifft die interne Logik des im multi-hop Maschennetz verwendeten Routing Protokolls und ist nicht der Bestandteil dieser Anmeldung. Iface beinhaltet die Information über die Netzwerkschnittstelle, über die diese Nachricht empfangen wurde. Dieses Ereignis wird z.B. nach Empfang von Host and Network Association (HNA) Signalisierungsnachrichten in OLSR [1] ausgelöst und an die MFT-Verwaltungseinheit übergeben.

Im Folgenden wird beschrieben, wie die Iface Info an MFT-Verwaltungseinheit gesendet wird.

Um erfolgreich die entsprechenden Dateneinträge in der MFT zu kreieren und die Mobilität der an ein multi-hop Maschennetz angebundenen Knoten zu unterstützen, muss die Zugangs-Netzwerkschnittstelle der MMN-Knoten bestimmte Ereignisse an die MFT-Verwaltungseinheit liefern können. Das wichtigste dieser Ereignisse ist die Assoziierung eines neuen Endgerätes mit der Zugangs-Netzwerkschnittstelle. Andere Ereignisse, wie z.B. das Abtrennen eines Endgerätes von der Zugangs-Netzwerkschnittstelle des MMN-Knotens können zusätzlich definiert werden, um die Genauigkeit und Geschwindigkeit der Reaktion auf Netzwerkzustand zu erhöhen. Für die späteren Erklärungen werden die grundlegenden Informationen, die von der Zugangs-Netzwerkschnittstelle eines MMN-Knotens an die MFT-Verwaltungseinheit übergeben werden, wie folgt definiert:
- Info_association[Iface_z, ha_m]: das mobile Endgerät mit der Hardware-Adresse ha_m hat sich mit dem MMN-Knoten assoziiert. Beispielsweise für die IEEE 802.11 Zugangstechnologie, hat das mobile Endgerät die Assoziierungsprozedur abgeschlossen. Die IEEE 802.11 Zugangs-Netzwerkschnittstelle des MMN-Knotens mit dem sich das mobile Endgerät assoziiert hat, kann diese Information an die MFT Verwaltungseinheit übergeben. Iface_z kennzeichnet die Netzwerkschnittstelle, mit der sich das mobile Endgerät assoziiert hat.

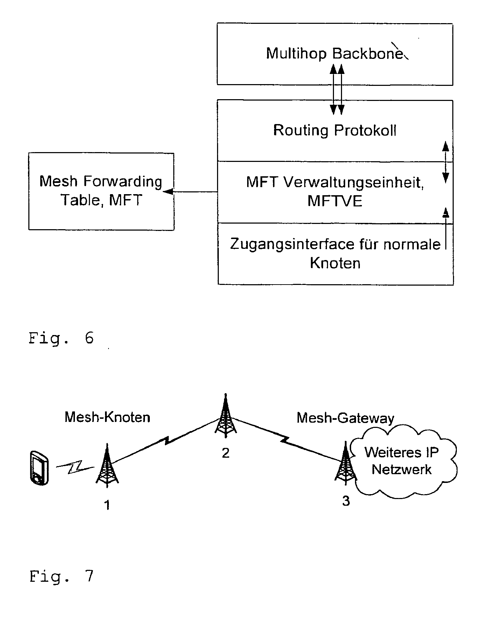

Die allgemeine Struktur der Informationsflüsse zwischen der MFT-Verwaltungseinheit, des im multi-hop Maschennetz verwendeten Routing Protokolls und der MAC Schicht der auf einem MMN-Knoten vorhandenen Zugangs-Netzwerkschnittstelle ist in Fig. 6 skizziert.

Es folgt ein Beispiel für einen one-hop Nachbarn.

Nach dem Starten eines MMN-Knotens werden die Informationen über den MMN-Knoten und dessen Gateway-Funktionalität von jedem MMN-Knoten innerhalb des MMN-Backbone verschickt. Nach dem Empfang solcher Signalisierungsnachrichten generiert das Routing Protokoll Programm das neue Ereignis Info_neighbour[Iface, ha, GW] an die MFT-Verwaltungseinheit. Nach Empfang dieses Ereignisses überprüft die MFT-Verwaltungseinheit, ob eine Unterspalte mit der Hardware-Adresse (HA) ha zu der Netzwerkschnittstelle Iface schon zugeordnet ist. Falls dies nicht der Fall ist, wird diese Unterspalte kreiert. Falls das GW Flag gesetzt ist, überprüft die MFT-Verwaltungseinheit (MFTVE) ob ein Dateneintrag any->any in der MFT vorhanden ist. Falls ja und der Dateneintrag verweist nicht auf den Nachbar mit der HA ha, wird dieser Eintrag gelöscht. Diese Situation bedeutet, dass sich das vorgegebene MMN-Gateway geändert hat, weil sich entweder die Route zu dem MMN-Gateway geändert hat, oder aber, falls mehrere MMN-Gateways im multi-hop Maschennetz verwendet werden, einer von diesen ausfällt. Danach wird ein neuer Dateneintrag any->any kreiert, der auf die Unterspalte mit der HA ha verweist. Im Anschluss daran informiert die MFTVE das Routing Protokoll darüber, dass der MMN-Knoten mit der HA ha über diesen MMN-Knoten ab jetzt zu erreichen ist. Das ist notwendig, wenn das im multi-hop Maschennetz verwendete Routing Protokoll diese Information nicht selber weiter verschickt. Das GW Flag wird in die neuen Signalisierungsnachrichten übernommen.

Im Folgenden wird ein Beispiel für die Iface Assoziierung beschrieben.

Die Zugangs-Netzwerkschnittstelle merkt Assoziierungen von den neuen mobilen Endgeräten. Als Ergebnis einer Assoziierung ist die HA ha_m des mobilen Endgerätes in jeder Zugangstechnologie bekannt. Die Zugangs-Netzwerkschnittstelle (seine MAC-Schicht) generiert ein neues Ereignis Info_association[Iface_z, ha_m] und sendet es an die MFTVE. Falls die MAC-Schicht solche Ereignisse nicht zur Verfügung stellt, kann diese Information von der MFTVE auch regelmäßig abgefragt werden. Als Ergebnis einer Abfrage erhält die MFTVE dieselben Informationen, wie auch im Falle eines Info_association Ereignisses. Die MFTVE überprüft, ob eine Unterspalte mit der HA ha_m der Spalte Iface_z zugeordnet ist. Falls dies nicht der Fall ist, wird diese Unterspalte kreiert. Danach überprüft die MFTVE, ob ein Dateneintrag any->ha_m in der MFT existiert. Falls ja und der Dateneintrag nicht auf die Spalte-Unterspalte Iface_z-ha_m verweist, wird dieser Dateneintrag gelöscht. Das bedeutet, dass ein mobiler Knoten von einem anderen MMN-Knoten zu dem MMN-Knoten gewechselt hat. Danach wird ein neuer Dateneintrag any->ha_m kreiert, der auf die Unterspalte mit der HA ha_m verweist. Nach der Modifizierung der MFT informiert der MFTVE das Routing Protokoll darüber, das ab sofort das mobile Endgerät ha_m über diesen MMN-Knoten zu erreichen ist. Das Routing Protokoll wird diese Information in dem multi-hop Maschennetz verschicken, das GW Flag wird in Signalisierungsnachrichten auf 0 gesetzt, da das mobile Endgerät kein MMN-Gateway ist.

Im Folgenden wird ein Beispiel für die Reachability gegeben.

Nach Empfang einer Signalisierungsnachricht vom MMN-Backbone, in der signalisiert wird, welche Knoten mit welchen Hardware-Adressen über welche MMN-Knoten mit einer spezifischen Hardware-Adresse erreicht werden können, greift zuerst die Logik des im multi-hop Maschennetz verwendeten Routing Protokolls, um die Routen zwischen einzelnen Knoten zu berechnen. Falls die Logik des Routing Protokolls entscheidet, dass ein Knoten mit HA ha_r über einen MMN-Knoten mit HA ha erreicht werden kann, generiert das Routing Protokoll ein neues Ereignis Info_reachability[Iface, ha_r, ha, GW] an die MFTVE. Iface kennzeichnet die Netzwerkschnittstelle, über die der MMN-Knoten die Nachrichten in dem multi-hop Maschennetz empfängt und verschickt. Das Flag GW signalisiert, ob der Knoten ha_r ein MMN-Gateway ist. Nach Empfang dieses Ereignisses überprüft die MFTVE, ob eine Unterspalte mit der HA ha in der MFT existiert. Diese sollte existieren, da ein MMN-Knoten zuerst immer die Signalisierungsnachrichten über deren Präsenz in dem multi-hop Maschennetz verschickt, sodass Info_neighbour Ereignis vorher von der MFTVE empfangen worden sein muss. Danach überprüft die MFTVE, ob eine Unterspalte für ha_r in der MFT existiert. Falls ja, wird diese Unterspalte gelöscht. Falls in der MFT Dateneinträge mit der Senkeadresse ha_r existieren, werden diese auch gelöscht. Diese Situation bedeutet, dass ein mobiles Endgerät seinen MMN-Knoten über den es an das multi-hop Maschennetz angebunden ist, gewechselt hat. Danach kreiert die MFTVE einen neuen MFT-Dateneintrag any->ha_r mit Verweis auf die Unterspalte ha zugeordnet zur Netzwerkschnittstelle Iface.

Oben sind die grundlegenden Ereignisse in dem Netzwerk und die Funktionalität der MFTVE in Abhängigkeit von diesen Ereignissen beschrieben. Weitere Ereignisse können definiert werden, um die genaueren Routen zwischen bestimmten Knoten bzw. Applikationen zu kreieren. Somit können z.B. die Pakete einer ftp-Session über eine Route und die Datenpakete einer VoIP-Session über eine andere Route und/oder über ein anderes MMN-Gateway, falls mehrere MMN-Gateways in dem multi-hop Maschennetz vorhanden sind, übermittelt werden.

Im Folgenden wird die Verwendung einer Mesh Forwarding Table /Tabelle beschrieben.

Die MFT wird bei der Übertragung von Datenpaketen verwendet. Dies können sowohl Datenpakete sein, die der lokale Knoten von einem seiner Nachbarn empfängt und an einen zweiten Nachbarn weiterleitet, aber auch Pakete, die von einer höheren Schicht (z. B: Routing Protokoll) des Knotens selbst erzeugt wurden.

Beim Weiterleiten eines unicast Datenpakets wird die MFT vom Anfang bis Ende nach einem Dateneintrag durchsucht, in dem die Quelle- und Senke-Hardware-Adressen mit den im Dateneintrag gespeicherten Daten übereinstimmen. Es ist auch möglich, in Abhängigkeit von den Systemeinstellungen, nur die Senke-HA oder auch weitere im Datenpaket vorhandene Inhalte als Suchkriterien zu verwenden. Das Datenpaket wird dann so weitergeleitet, wie es in dem Dateneintrag definiert ist.

Beim Weiterleiten eines broadcast Datenpakets wird das Paket erstmal auf seine Gültigkeit geprüft. Wegen der kabellosen Natur eines multi-hop Maschennetzes muss das broadcast Paket nicht nur über weitere Netzwerkschnittstellen eines MMN-Knotens sondern auch über die Netzwerkschnittstelle, über das das Datenpaket empfangen wurde, verschickt werden. Dadurch werden Szenarien, ähnlich der in Fig. 7 dargestellten, ermöglicht.

In diesem Beispielszenario besteht zwischen MMN-Knoten 1 und 3 keine direkte Funkverbindung. Im Falle, dass MMN-Knoten 1 ein broadcast Datenpaket verschickt, wird dies von MMN-Knoten 2 empfangen und über die gleiche Netzwerkschnittstelle wieder verschickt. Auf diese Weise ist MMN-Knoten 3 auch in der Lage das broadcast Datenpaket von MMN-Knoten 1 zu empfangen. Gleichzeitig empfängt natürlich auch MMN-Knoten 1 das von MMN-Knoten 2 wiederverschickte broadcast Datenpaket. Den Dateninhalt muss dieser MMN-Knoten aber nicht mehr berücksichtigen, da er selbst Erzeuger des Paketes ist. Methoden, solche Situationen zu erkennen und ein wiederholt empfangenes Datenpaket zu löschen, sind dem Fachmann bekannt, und werden folglich auf dem Knoten angewendet.

Der MFT-Dateneintrag für Datenpakete, die an die broadcast Adresse adressiert sind, verweist auf jede Netzwerkschnittstelle in der MFT wie in Fig. 5 gezeigt. Falls ein broadcast Datenpaket auf einem MMN-Gateway über die Netzwerkschnittstelle empfangen wird, über das der MMN-Gateway an ein anderes Netzwerk angebunden ist, muss das Datenpaket nicht über diese Netzwerkschnittstelle wieder verschickt werden. Falls das broadcast Datenpaket von der IP-Schicht eines MMN-Knotens kommt, muss es nicht nochmals an die IP-Schicht geschickt werden. Daher wird das broadcast Datenpaket nach der Überprüfung der Paketgültigkeit vermehrt und an alle in dem broadcast MFT-Dateneintrag verwiesenen Netzwerkschnittstellen weitergeleitet, mit Ausnahme der Netzwerkschnittstelle, die den MMN-Gateway mit einem externen Netzwerk verbindet oder der IP-Schicht des MMN-Knotens, falls das broadcast Datenpaket von diesen empfangen wurde.

Falls kein passender MFT-Dateneintrag für die Paketdaten gefunden wird, wird das Datenpaket verworfen.

Im Folgenden wird auf die Sicherheit und Fehlerbeständigkeit der beschriebenen Methoden eingegangen.

Es kann vorkommen, dass bei der Übertragung von Signalisierungsnachrichten des im multi-hop Maschennetz verwendeten Routing Protokolls veraltete Nachrichten an einem MMN-Knoten später ankommen, als neuere Nachrichten. Maßnahmen, um solche Situationen zu vermeiden, bzw. deren negative Auswirkungen zu verhindern, werden normalerweise vom Routing Protokoll selbst zur Verfügung gestellt. Zumeist wird hierfür jedem Nachrichtenpaket eine eindeutige Sequenznummer zugeordnet, welche die Aktualität der Nachricht beinhaltet. Sollten solche Verfahren nicht vom Routing Protokoll zur Verfügung gestellt werden, ist es auch möglich, entsprechende Mechanismen in die MFTVE zu integrieren. Beispielsweise kann das bereits oben beschriebene Verfahren, das auf der Verwendung von Sequenznummern basiert, verwendet werden. In diesem Fall sollte ein Teil des Routing Protokolls in der MFTVE realisiert werden. Genaue Spezifikation dieser Maßnahmen ist dem Fachmann bekannt und ist nicht der Bestandteil dieser Erfindung.

Das hier beschriebene Verfahren zur Datenübertragung basiert auf der Verwendung von Hardware-Adressen der MMN-Knoten und der Endgeräte. Dies ermöglicht den Angriff auf das multi-hop Maschennetz, da Hardware-Adressen relativ leicht verfälscht werden können. Auch zur Vermeidung solcher Situationen gibt es bereits Mechanismen, die in das beschriebene Verfahren integriert werden können, z. B. IEEE 802.11f [11].

Im Folgenden werden einige Ausführungsbeispiele für IP Kommunikation zwischen ein an das multi-hop Maschennetz angebundenes Endgerät und einem anderen sich in demselben Maschennetz oder in einem weiterem IP-Netzwerk befindenden IP Teilnehmer beschrieben.

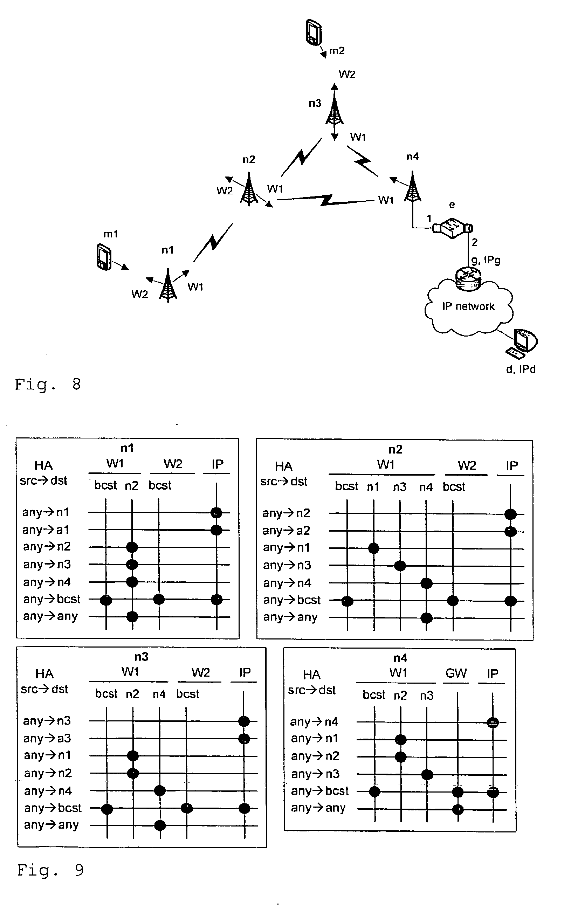

Figur 8 stellt ein Beispielnetzwerkszenario dar, anhand dessen die detaillierte Funktionalität des vorgeschlagenen Verfahrens während des Aufbaus einer IP-Konnektivität und einer IP-Datenübertragung sowie die Durchführung eines Handovers schrittweise erklärt ist.

In einem multi-hop Maschennetz sind 4 MMN-Knoten n1, n2, n3 und n4 vorhanden. Für die Kommunikation zwischen den einzelnen MMN-Knoten werden kabellose Netzwerkschnittstellen W1 (z.B. IEEE 802.11) mit den entsprechenden Hardware-Adressen n1-n4 verwendet. Die MMN-Knoten n2, n3 und n4 können direkt miteinander kommunizieren, da sie sich in der Funkreichweite der jeweiligen anderen Knoten befinden. MMN-Knoten n1 kann mit den MMN-Knoten n3 und n4 nur über den MMN-Knoten n2 kommunizieren. MMN-Knoten n4 ist ein MMN-Gateway, der mit einem weiteren kabelgebundenen Netzwerk (z.B. IEEE 802.3, Ethernet) verbunden ist. Der MMN-Knoten n4 ist somit an den Port 1 eines Ethernet Switches e angebunden, an dessen Port 2 ein IP-Router mit entsprechenden Hardware- g und IP-Adressen IPg angeschlossen ist. Der IP-Router beinhaltet DHCP Funktionalität. Über den Ethernet-Switch e können weitere Zugangspunkte (z.B. IEEE 802.11 Access Points) angeschlossen werden. Die MMN-Knoten n1-n3 haben zusätzlich weitere Netzwerkschnittstellen W2 mit entsprechenden Hardware-Adressen a1-a3 über die die mobilen Endgeräte an das multi-hop Maschennetz angebunden werden können. In der Reichweite der MMN-Knoten n1 und n3 befinden sich zwei mobile Endgeräte m1 und m2 mit entsprechenden Hardware-Adressen der Netzwerkschnittstellen, die sie für die Anbindung an das multi-hop Maschennetz verwenden. Ein IP-Host d mit der entsprechenden IP-Adresse IPd ist an das IP Netzwerk angebunden. Dieser Knoten wird in dem beschriebenen Netzwerkszenario als ein Korrespondent für die mobilen Endgeräte verwendet.

In den unten beschriebenen Beispielen besteht der erste Schritt darin, alle Knoten, die in Figur 8 dargestellt sind, zu starten. Im nächsten Schritt baut das mobile Endgerät m2 eine IP Verbindung zum Korrespondent d und das mobile Endgerät m1 eine IP Verbindung zu dem mobilen Endgerät m2 auf. Im Laufe dieser Verbindungen bewegt sich das mobile Endgerät m1 vom MMN-Router n1 zum MMN-Router n2.

Das hier beschriebene Beispiel basiert auf einem IPv4 Netzwerk.

Nach dem Starten aller MMN-Knoten werden die MFTs auf allen MMN-Knoten kreiert. In den MFTs der MMN-Knoten n1-n3 werden die Netzwerkschnittstellen W1 und W2 sowie die IP-Schicht eingetragen. Weiterhin werden Dateneinträge für broadcast any->bcst und für die eigenen Hardware-Adressen der auf den MMN-Knoten vorhandenen Netzwerkschnittstellen (any->aX und any->nX) vorgenommen. Der MMN-Gateway besitzt keine W2 Netzwerkschnittstelle, dafür aber eine kabelgebundene Netzwerkschnittstelle GW, die den MMN-Gateway und den Ethernet Switch verbindet.

Die Routing Protokoll Programme auf allen MMN-Knoten werden gestartet. Die Signalisierungsnachrichten mit der Information über die Präsenz einzelner MMN-Knoten werden über das MMN-Backbone versendet. Somit werden auf dem MMN-Knoten n4 die neuen Unterspalten n2 und n3 zur W1 Netzwerkschnittstelle hinzugefügt. Die Dateneinträge any->n2 und any->n3 mit Verweis auf die entsprechenden MMN-Knoten n2 und n3 werden erzeugt. Nach Empfang einer Signalisierungsnachricht von n2 über die Präsenz von n1 wird zusätzlich ein neuer Eintrag any->n1 mit Verweis auf n2 erstellt. Auf dem MMN-Knoten (MK) n3 werden zu der Netzwerkschnittstelle W1 die neuen Spalten n2 und n4 mit entsprechenden Dateneinträgen (any->n2 und any->n4) hinzugefügt. Da das GW Flag der Signalisierungsnachrichten von MK n4 gesetzt ist, kreiert n3 einen neuen Dateneintrag any->any mit Verweis auf Spalte n4. Nach Empfang einer Signalisierungsnachricht vom n2 über die Präsenz von n1 wird zusätzlich ein neuer Eintrag any->n1 mit Verweis auf n2 erstellt. Das Routing Protokoll auf n3 kann z. B. aufgrund schlechter n3 ->n4 Link-Qualität die Route zum MMN-Gateway über den MK n2 neu anlegen. Diese Funktionalität ist in der Logik des Routing Protokolls beinhaltet. Über solche Entscheidungen informiert das Routing Protokoll die MFTVE mithilfe der oben beschriebenen Info_neighbour und Info_reachability Ereignissen mit gesetztem oder gelöschtem GW Flag. Auf dem MK n2 werden zum W1 die neuen Spalten n1, n3 und n4 mit entsprechenden Dateneinträgen hinzugefügt und der zusätzliche Dateneintrag any->any mit Verweis auf die Spalte n4 wird kreiert. Auf dem MK n1 wird nur eine neue Spalte n2 zum W1 mit entsprechendem Dateneintrag any->n2 angelegt. Nach Empfang einer Signalisierungsnachricht vom n2 über die Präsenz von n3 und n4 werden zusätzlich die neuen Dateneinträge any->n3 und any->n4 mit Verweis auf n2 erstellt. Ein neuer Dateneintrag any->any mit Verweis auf n2 wird kreiert unabhängig von der Gateway-Route zwischen n2 und n4.

Im Folgenden wird das Einschalten mobiler Endgeräte m1 und m2 und dessen Assoziierung mit dem multi-hop Maschennetz beschrieben.

Nach dem Starten des mobilen Endgerätes m1 sucht dieses nach vorhandenen Zugangspunkten in seiner Reichweite. Da die Netzwerkschnittstelle W2 des MMN-Knotens n1 für die Anbindung von normalen Knoten vorgesehen ist und die Knoten n1 und m1 sich in Reichweite voneinander befinden, findet das mobile Endgerät m1 den Zugangspunkt auf dem MMN-Knoten n1 und startet den Netzwerk-Assoziierunqs Prozess entsprechend der verwendeten Zugangstechnologie. Als Ergebnis dieser Assoziierung ist die Hardware-Adresse (HA) des mobilen Endgerätes m1 der Netzwerkschnittstelle W2 auf dem MMN-Knoten n1 bekannt. Die MFTVE wird darüber informiert. Eine neue Unterspalte m1 wird der W2 Netzwerkschnittstelle mit dem entsprechenden Dateneintrag any->m1 hinzugefügt. Zusätzlich kann ein Dateneintrag m1->any kreiert werden, falls die Quelle-HA bei der Paketübertragung berücksichtigt werden muss. Die MFTVE informiert im Anschluss daran das Routing Protokoll, dass eine neue HA ab jetzt über diesen MMN-Knoten erreicht werden kann. Nach Empfang der Signalisierungsnachrichten mit dieser Information, kreiert der MK n2 einen neuen MFT Dateneintrag any->m1 mit Verweis auf n1 und die MMN-Knoten n3 und n4 denselben Eintrag mit Verweis auf n2.

Nach dem Einschalten des mobilen Endgerätes m2, werden die gleichen Operationen wie oben beschrieben, durchgeührt. Anschließend assoziiert sich das Endgerät m2 mit dem MMN-Knoten n2.

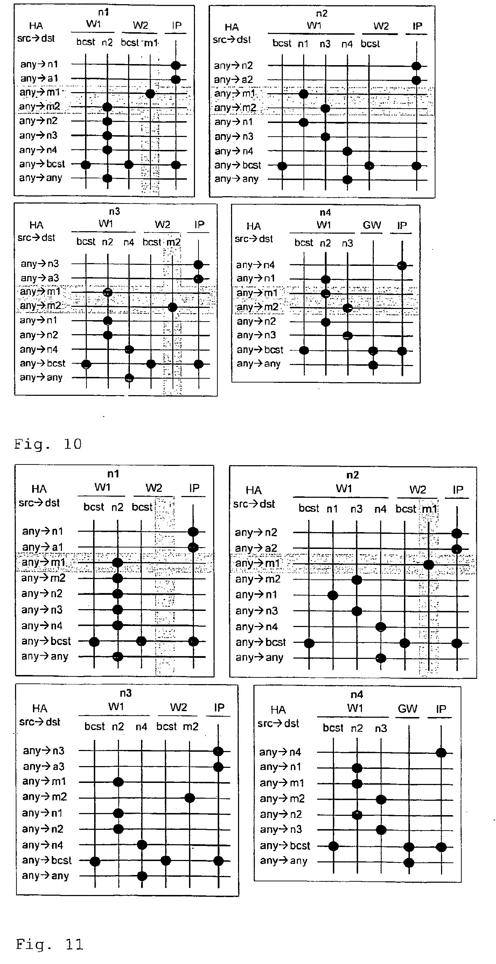

Figur 10 zeigt die erneuerten MFTs auf allen MMN-Knoten nach dem Einschalten von m1 und m2, die Änderungen der MFTs im Vergleich zu den MFTs in Figur 9 sind grau hinterlegt.

Im Folgenden wird anhand Figur 10 ein Beispiel für die Konfiguration einer IP-Adresse für das mobile Endgerät m1 gegeben.

Nach dem Aufbau einer physikalischen Verbindung zwischen dem mobilen Endgerät m1 und dem Zugangspunkt auf dem MMN-Knoten n1 muss die IP-Konnektivität für das mobile Endgerät sichergestellt werden. Angenommen, es gibt keine vorkonfigurierten IP Einstellungen auf dem mobilen Endgerät und dieses startet den DHCP-Mechanismus um die IP Einstellungen vom einem DHCP Server konfigurieren zu lassen.

Dazu müssen zwischen m1 und dem DHCP Server g, 4 DHCP Nachrichten ausgetauscht werden:
1. DHCP Discover, broadcast Packet: m1->bcst
2. DHCP Offer, unicast Packet: g->m1
3. DHCP Request, broadcast Paket: m1->bcst
4. DHCP ACK, unicast Paket: m1->g

Das erste Paket wird auf dem MMN-Knoten n1 empfangen. Entsprechend der MFT wird das Paket an den MK selber ins System übergeben, deren Kopien werden auch über W1 und W2 broadcast verschickt. Das Paket wird an dem MK n4 empfangen und an das System übergeben, deren Kopien werden über W1 und GW Netzwerkschnittstellen weitergeschickt. Das Paket wird an dem Port 1 des Ethernet Switches e empfangen, die Quelle-HA m1 wird diesem Port zugeordnet und das Paket wird über alle angeschlossenen Ports des Switches weitergeschickt. Somit empfängt der IP-Router mit DHCP Funktionalität das Paket. Alle anderen Kopien des Pakets, die an MMN-Knoten n3 und n1 ankommen, werden vom System oder von Schutzmechanismen ignoriert bzw. verworfen, um broadcast Flooding zu verhindern.

Der DHCP-Server generiert eine Antwort und schickt das zweite Paket mit HA g->m1 zurück in Richtung des Ethernet Switches e. Der Switch e leitet das unicast Paket über Port 1 in Richtung des MK n4 weiter. Der MK n4 sucht seine MFT durch und findet den passenden Dateneintrag any->m1. Dementsprechend verschickt n4 das zweite Paket an den nächsten Hop, den MK n2. Der MK n2 macht das Gleiche und verschickt das Paket an den MK n1. Der MK n1 sucht seine MFT durch und verschickt das Paket direkt an das mobile Endgerät m1 über die Zugangsnetzwerkschnittstelle W2. Somit wird das zweite Datenpaket sein Ziel erreichen.

In gleicher Weise werden das 3. und das 4. Paket zwischen dem mobilen Endgerät m1 und dem DHCP Server g übermittelt. Danach wird eine neue IP auf dem mobilen Endgerät m1 konfiguriert inklusive weiterer IP Einstellungen, wie Subnetzmaske, Server und der vorgegebene Gateway IPg, der für die IP-Pakete, die z.B. an den Korrespondent IPd geschickt werden müssen, verwendet wird.

Die gleichen Operationen werden auch für das mobile Endgerät m2 vorgenommen.

Im Folgenden wird der Aufbau einer IP-Verbindung zwischen dem mobilen Endgerät m2 und dem Korrespondent d, der sich in einem anderen IP Netzwerk befindet, beschrieben.

Nachdem ein mobiler Knoten die IP-Einstellungen konfiguriert hat, kann er eine IP Verbindung mit anderen IP Knoten in dem gleichen multi-hop Maschennetz oder in anderen Netzwerken aufbauen. Da die IP-Adresse des Korrespondenten sich in einem anderen IP Subnetz befindet, schickt das mobile Endgerät m2 die IP-Pakete über den IP-Router (Gateway) mit der IP-Adresse IPg. Um die Datenpakete über die IPg verschicken zu können, muss das mobile Endgerät m2 die Hardware-Adresse des IP-Routers g kennen. Dafür werden zwischen dem mobilen Endgerät m2 und dem IP-Router g die ARP Pakete ausgetauscht:
1. ARP Request: broadcast Paket m2->bcst
2. ARP Reply unicast Paket: g->m2

Das erste Paket wird genauso wie das DHCP Discovery Paket auf dem IP-Router g empfangen. Alle anderen Kopien des Pakets auf anderen Knoten werden entweder vom System oder von dem Flooding-Schutzmechanismus entfernt. Das System des IP-Routers erkennt, dass es eine Antwort auf dieses Paket generieren muss und kreiert das Antwortpaket ARP Reply mit den Hardware-Adressen g->m2 an das mobile Endgerät m2. Dieses Paket wird auf dem MMN-Gateway n4 über den Ethernet-Switch e empfangen. Dann wird aufgrund der Information in der MFT das Paket an den MK n3 übergeben. Der MK n3 schickt das zweite Paket direkt an das mobile Endgerät m2. Somit erkennt das mobile Endgerät m2 die HA des IP-Routers g. Nun kann er mit der eigentlichen Übertragung von IP Daten zum Korrespondenten d anfangen. Die Quelle- und Senke-Hardware-Adressen dieser Pakete werden m2->g sein. In dem MMN-Knoten n3 werden sie entsprechend dem Dateneintrag any->any an den MMN-Gateway n4 entsprechend der verwendeten Technologie im MMN-Backbone übermittelt. Auf dem MMN-Gateway n4 werden sie dann über den Ethernet Switch e und dann an den IP-Router g übermittelt, wie von dem IEEE 802.3 (Ethernet) Standard definiert. Dafür werden letztendlich nur die originalen Quelle- und Senkte-Hardware-Adressen in dem Datenpaket verwendet. Somit ist die Übertragung dieser Datenpakete in Richtung des Korrespondenten d sichergestellt.

Die Datenpakete vom Korrespondenten d zum mobilen Endgerät m2 werden auch über den IP-Router g übermittelt. In dem Subnetz, das der IP-Router bildet, werden die Hardware-Adressen dieser Datenpakete g->m2 sein. Die Zustellung dieser Pakete passiert genauso, wie die Zustellung des 2. ARP Pakets.

Im Folgenden wird ein Beispiel für eine Mobilität eines mobilen Endgerätes zwischen zwei MMN-Knoten in einem multi-hop Maschennetz gegeben.

Während der aufgebauten IP-Verbindung von einem mobilen Endgerät und einem anderen IP-Teilnehmer, z.B. zwischen den mobilen Endgeräten m1 und m2, kann es vorkommen, dass das mobile Endgerät das Versorgungsgebiet eines MMN-Routers verlässt und sich in das Versorgungsgebiet eines anderen MMN-Routers bewegt, z.B. das mobile Endgerät m1 vom MK n1 zum MK n2. Nach dem Verlassen des Versorgungsgebietes der Zugangsnetzwerkschnittstelle auf dem MK n1 scannt das mobile Endgerät m1 die Funkkanäle nach den anderen vorhandenen Zugangspunkten. Dieser Prozess ist von der jeweiligen Zugangstechnologie abhängig und ist in den entsprechenden Standarten definiert. Nach dem Scannen assoziiert sich das mobile Endgerät m1 mit dem gefundenem Zugangspunkt, in dem Beispiel mit der auf dem MK n2 vorhandenen Zugangsnetzwerkschnittstelle W2. Dieser Prozess ist wiederum von der jeweiligen Zugangstechnologie abhängig. Nach der Assoziierung generiert die Zugangsnetzwerkschnittstelle das Ereignis Info_association an die MFTVE. Mit diesem Ereignis entsprechend dem in Sektion 3.b beschriebenen Algorithmus wird auf dem MK n2 der alte Dateneintrag any->m1 gelöscht und eine neue Unterspalte m1 der Netzwerkschnittstelle W2 hinzugefügt. Zusätzlich wird ein neuer Dateneintrag any->m1 mit Verweis auf m1 erstellt. Die Information, dass das mobile Endgerät ab jetzt über den MK n2 zu erreichen ist, wird an das Routing Protokoll Programm übergeben, das diese Information über das MMN-Backbone verschickt. Nach Empfang dieser Signalisierungsnachricht generieren die Routing Protokoll Programme auf MK n1, n3 und n4 die Info_reachability Ereignisse an die MFTVE der entsprechenden MMN-Knoten. Die Dateneinträge any->m1 existieren auf allen MMN-Knoten. Allerdings sind sie auf MK n3 und n4 auf den gleichen MMN-Knoten n2 verwiesen. Somit hat das neue Ereignis keine neue Information für diese MMN-Knoten, Dateneinträge werden auf diesen daher nicht verändert. Der existierte Dateneintrag auf dem MMN-Knoten n1 any->m1 verweist auf das mobile Endgerät m1 selber. Das Info_reachability Ereignis beinhaltet daher die neue Information für den MMN-Knoten n1. Der existierte Dateneintrag any->m1 und die Unterspalte m1 werden dann gelöscht und ein neuer Dateneintrag any->m1 mit Verweis auf den MMN-Knoten n2 wird erzeugt. Die MFTs aller MMN-Knoten nach diesen Operationen sind in Figur 11 gezeigt, die Änderungen sind grau betont.

Falls das auf dem mobilen Endgerät installierte Betriebssystem entscheidet, eine neue IP-Adresse für das Endgerät nach Re-Assoziierung mit dem neuen Zugangspunkt durchzuführen, wird ein neuer DHCP Prozess gestartet. Dafür kommuniziert das Endgerät m1 mit dem DHCP-Server IPg, wie vorher bereits beschrieben. Der DHCP-Server wird aber merken, dass die MAC (Hardware) Adresse und die gewünschte IP-Adresse des anfragenden Endgerätes die gleichen sind, wie vorher im Punkt 3 konfiguriert. Daher wird dem mobilen Endgerät m1 die gleiche IP-Adresse mitgeteilt sodass sich die IP-Adresse des mobilen Endgerätes nach der Re-Assoziierung mit dem neuen Zugangspunkt nicht ändert.

Die Kommunikation zwischen den mobilen Endgeräten m1 und m2 läuft weiter ununterbrochen. Die Verzögerung der Handoverbearbeitung bei dem vorgeschlagenen Einsatz beschränkt sich auf das Suchen eines neuen Zugangspunktes, die Assoziierung mit diesem und das Verschicken einer Signalisierungsnachricht über die neue Position des mobilen Endgerätes in dem multi-hop Maschennetz. Diese Nachricht kann sofort nach dem Info_association Ereignis von der Zugangsnetzwerkschnittstelle generiert werden. Da die zwei MMN-Knoten, zwischen denen das mobile Endgerät sich bewegt (alter und neuer MK), generell auf dem direkten Weg zwischen einander verbunden sind (kein dazwischen liegender MMN-Knoten), wird die Signalisierungsnachricht ohne weitere Verzögerung auf dem alten MK empfangen. Die auf dem alten MK installierte MFT wird dann von der MFTVE direkt nach dem Info_reachability Ereignis von dem Routing Protokoll geändert. Die älteren Datenpakete, die danach noch eventuell auf dem alten MK empfangen werden können, werden dann auf den neuen MK übertragen. Somit entstehen keine Paketverluste. Die neuen Pakete werden direkt an den neuen MK übermittelt, sodass die Handoververzögerung minimal bleibt.

### Literaturliste

### Referenzen

[1] T. Clausen, P. Jacquet. Optimized Link State Routing Protocol (OLSR). IETF RFC 3626, October 2003. http://www.ietf.org/rfc/rfc3626.txt
[2] C. Perkins, E. Belding-Royer, S. Das. Ad hoc On-Demand Distance Vector (AODV) Routing. IETF RFC 3561, July 2003. http://www.ietf.org/rfc/rfc3561.txt
[3] D. Johnson, Y. Hu, D. Maltz. The Dynamic Source Routing Protocol (DSR) for Mobile Ad Hoc Networks for IPv4. IETF RFC 4728, February 2007. http://www.ietf.org/rfc/rfc4728.txt
[4] D. Plummer. An Ethernet Address Resolution Protocol. IETF RFC 826, November 1982. http://www.ietf.org/rfc/rfc826.txt
[5] T. Narten, E. Nordmark, W. Simpson. Neighbor Discovery for IP Version 6 (IPv6). IETF RFC 2461, Dexember 1998. http://www.ietf.org/rfc/rfc2461.txt
[6] R. Droms. Dynamic Host Configuration Protocol. IETF RFC 2131, March 1997. http://www.ietf.org/rfc/rfc2131.txt
[7] C. Perkins. IP Mobility Support for IPv4. IETF RFC 3344, August 2002. http://www.ietf.org/rfc/rfc3344.txt
[8] J. Rosenberg, H. Schulzrinne, G. Gamarillo, A. Johnston, J. Peterson, R. Sparcks, M. Handley, and E. Schooler. SIP: Session Initiation Protocol. IETF RFC 3261, June 2002. http://www.ietf.org/rfc/rfc3261.txt
[9] T. Henderson. End-Host Mobility and Multihoming with the Host Identity Protocol. IETF draft, June 23 2006. draft-ietf-hip-mm-04.
[10] R. Stewart, Q. Xie, K. Morneault, C. Sharp, H. Schwarzbacher, T. Taylor, I. Rytina, M. Kalla, L. Zhang, and V. Paxson. Stream Control Transmission Protocol. IETF RFC 2096, October 2002. http://www.ietf.org/rfc/rfc2096.txt
[11] IEEE 802.11f Standard des Institute of Electrical and Electronics Engineers (IEEE). Juni 2003
[12] S-H. Lee, Y-B. Ko. An Efficient Multi-hop ARP Scheme for Wireless LAN based Mesh Networks. First Workshop on Operator-Assisted (Wireless Mesh) Community Networks (OpComm'06), Berlin, Germany, Sep. 2006.

## Patentansprüche

1. Verfahren zur Steuerung von IP transparenten drahtlosen multi-hop Maschennetzwerken, "MMN", mit Mobilitätsunterstützung, umfassend MMN-Knoten die mindestens eine Netzwerk-Schnittstelle aufweisen, über die sie miteinander kommunizieren können und den drahtlosen Zugang von mobilen Endgeräten zum Maschennetzwerk bereitstellen, wobei die IP transparente Weiterleitung von Paketen unterhalb der Netzwerkschicht durch einen MMN-Knoten auf Basis einer Mesh-Forwarding-Tabelle erfolgt; wobei die Mesh-Forwarding-Tabelle sowohl durch ein Mesh Routingprotokoll als auch durch die Assoziierung von Endgeräten mit dem MMN-Knoten aufgebaut wird, so dass nicht Mesh-fähige Endgeräte in das Maschennetzwerk IP transparent integriert werden können, **dadurch gekennzeichnet, dass** die Mesh-Forwarding-Tabelle eine Abbildung von Quell-Senke Hardware-Adressen-Paare auf die Netzwerkschnittstellen des MMN-Knoten und die Adresse des nächsten Hop durchführt, so dass anhand der Quell-Senke Hardware-Adressen-Paare entschieden werden kann, wie die Weiterleitung der Pakete erfolgt.

2. Das verfahren nach dem vorhergehenden Anspruch, wobei die Adressen Layer-2 Adressen sind, insbesondere MAC-Adressen.

3. Das Verfahren nach einem oder mehreren der vorhergehenden Ansprüche, wobei Quell-Senke Hardware-Adressen-Paare in der Mesh-Forwarding-Tabelle durch weitere Paketinhalte erweitert werden können sodass Routen- und/oder Lastverteilung optimiert werden können.

4. Das Verfahren nach einem oder mehreren der vorhergehenden Ansprüche, wobei die Mesh-Forwarding-Tabelle nach dem Start des MMN-Knotens Einträge für die Adressen der eigenen Netzwerk-Schnittstellen in die Mesh-Forwarding-Tabelle einträgt.

5. Das Verfahren nach dem vorhergehenden Anspruch, wobei die Quell-Senke Hardware-Adressen-Paare-Zuordnung für die eigenen Schnittstellen auf eine eigene IP-Adresse verweist, so dass erkannt wird, dass Pakete, die direkt an den MMN-Knoten gerichtet sind, durch eine höhere Protokollebene des MMN-Knotens verarbeitet werden.

6. Das Verfahren nach einem oder mehreren der vorhergehenden Ansprüche, wobei beim Anmelden eines mobilen Endgerätes ein Quell-Senke Hardware-Adressen-Paare-zu-Schnittstellen-Eintrag des MMN-Knotens in die Mesh-Forwarding-Tabelle aufgenommen wird.

7. Das Verfahren nach einem oder mehreren der vorhergehenden Ansprüche, wobei ein MMN-Knoten mit einer Gateway-Schnittstelle als eigenständig **gekennzeichnet**er Gateway-Eintrag in der Mesh-Forwarding-Tabelle geführt wird.

8. Das Verfahren nach einem oder mehreren der vorhergehenden Ansprüche, wobei die Schnittstellen-Zuordnung nochmals unterteilt ist, in Nachbar MMN-Knoten die unmittelbar über die Schnittstelle erreichbar sind.

9. Das Verfahren nach einem oder mehreren der vorhergehenden Ansprüche, wobei ferner eine Broadcast-Adresse zu Schnittstelle Zuordnung gegeben ist, die eine Behandlung von Broadcast-Paketen regelt.

10. Das Verfahren nach einem oder mehreren der vorhergehenden Ansprüche, wobei die Einträge der Mesh-Forwarding-Tabelle beim Systemstart eines MMN-Knotens in das Netzwerk propagiert werden oder bei der Veränderung der Mesh-Forwarding-Tabelle, wie durch die Anmeldung eines mobilen Endgerätes.

11. Das Verfahren nach einem oder mehreren der vorhergehenden Ansprüche, wobei die Einträge, der Mesh-Forwarding-Tabelle durch einen Routing-Algorithmus verarbeitet werden, und dann über ein Routingprotokoll das Ergebnis des Routing-Algorithmus an weitere MMN-Knoten übertragen wird.

12. MMN-Knoten, der als Bestandteil eines IP transparenten drahtlosen multi-hop Maschennetzwerken, "MMN", mit Mobilitätsunterstützung fungiert und den drahtlosen Zugang von mobilen Endgeräten zum Maschennetzwerken bereitstellt, umfassend mindestens eine Netzwerkschnittstelle, eine Routingeinheit, die die Weiterleitung von Paketen auf der Basis einer Mesh-Forwarding-Tabelle durchführt, wobei die Mesh-Forwarding-Tabelle in einem Speicher abgelegt ist und sowohl durch ein Mesh Routingprotokoll als auch durch die Assoziierung von Endgeräten mit dem MMN-Knoten aufgebaut wird, so dass nicht Mesh-fähige Endgeräte in das Maschennetzwerk IP transparent integriert werden können, **dadurch gekennzeichnet, dass** die Mesh-Forwarding-Tabelle eine Abbildung von Quell-Senke Hardware-Adressen-Paare auf die Netzwerkschnittstellen des MMN-Knoten und die Adresse des nächsten Hop durchführt, so dass anhand der Quell-Senke Hardware-Adressen-Paare entschieden werden kann, wie die Weiterleitung der Pakete erfolgt.

13. Der MMN-Knoten nach Anspruch 12, wobei die Adressen Layer-2 Adressen sind, insbesondere MAC-Adressen

14. Der MMN-Knoten nach einem oder mehreren der Ansprüche 12 und 13, wobei Quell-Senke Hardware-Adressen-Paare in der Mesh-Forwarding-Tabelle durch weitere Paketinhalte erweitert werden können, sodass Routen- und/oder Lastverteilung optimiert werden können.

15. Der MMN-Knoten nach einem oder mehreren der Ansprüche 12 bis 14, wobei Mittel vorhanden sind, die in die Mesh-Forwarding-Tabelle nach dem Start des MMN-Knotens Einträge für die Adressen der eigenen Netzwerk-Schnittstelle eintragen.

16. Der MMN-Knoten nach dem vorhergehenden Anspruch, wobei die Quell-Senke Hardware-Adressen-Paare-Zuordnung für die eigenen Schittstellen auf eine eigene In-Adresse verweist, so dass die Routingeinheit erkennt, dass Pakete, die direkt an den MMN-Knoten gerichtet sind, durch eine höhere Protokollebene des MMN-Knotens verarbeitet werden.

17. Der MMN-Knoten nach einem oder mehreren der Ansprüche 12 bis 16, wobei beim Anmelden eines mobilen Endgerätes ein Quell-Senke Hardware-Adressen-Paare-zu-Schnittstellen-Eintrag des MMN-Knotens in die Mesh-Forwarding-Tabelle aufgenommen wird.

18. Der MMN-Knoten nach einem oder mehreren der Ansprüche 12 bis 17, wobei ein MMN-Knoten mit einer Gateway-Schnittstelle als eigenständig **gekennzeichnet**es Gateway in der Mesh-Forwarding-Tabelle geführt wird, der einen zusätzlichen Eintrag bei der Quell-Senke Hardware-Adressen-Paare-Zuordnung zulässt.

19. Der MMN-Knoten nach einem oder mehreren der Ansprüche 12 bis 18, wobei die Schnittstellen Zuordnung nochmals im Speicher in Nachbar-MMN-Knoten unterteilt ist, die unmittelbar über die Schnittstelle erreichbar sind.

20. Der MMN-Knoten nach einem oder mehreren der Ansprüche 12 bis 19, wobei ferner eine Broadcast-Adresse-zu-Schnittstelle-Zuordnung gegeben ist, die eine Behandlung von Broadcast-Paketen regelt.

21. Der MMN-Knoten nach einem oder mehreren der Ansprüche 12 bis 20, wobei die Enträge der Mesh-Forwarding-Tabelle beim Systemstart eines MMN-Knotens in das Netzwerk propagiert werden oder bei der Veränderung der Mesh-Forwarding-Tabelle, wie durch die Anmeldung eines mobilen Endgerätes.

22. Der MMN-Knoten nach einem oder mehreren der Ansprüche 12 bis 21, wobei die Einträge der Mesh-Forwarding-Tabelle durch einen Routing-Algorithmus verarbeitet werden, und dann über ein Routingprotokoll das Ergebnis des Routing-Algorithmus an weitere MMN-Knoten übertragen wird.

## Claims

1. Method for controlling IP transparent wireless multi-hop mesh networks, "MMN," with mobility support, comprising MMN nodes that have at least one network interface through which they can communicate with one another and provide wireless access from mobile terminal devices to the mesh network, wherein the IP transparent forwarding of packets below the network layer takes place through an MMN node on the basis of a mesh forwarding table; wherein the mesh forwarding table is constructed both by means of a mesh routing protocol and by means of the association of terminal devices with the MMN node so that non-mesh-capable terminal devices can be integrated in the mesh network in an IP transparent manner, **characterized in that** the mesh forwarding table carries out a mapping of source/sink hardware address pairs onto the network interfaces of the MMN node and the address of the next hop so that it is possible to determine, based on the source/sink hardware address pairs, how the forwarding of the packets takes place.

2. The method according to the preceding claim, wherein the addresses are layer-2 addresses, in particular MAC addresses.

3. The method according to one or more of the preceding claims, wherein source/sink hardware address pairs in the mesh forwarding table can be extended through additional packet contents so that route distribution and/or load distribution can be optimized.

4. The method according to one or more of the preceding claims, wherein the mesh forwarding table records entries for the addresses of the local network interfaces in the mesh forwarding table after the MMN node has started.

5. The method according to the preceding claim, wherein the source/sink hardware address pair assignment for the local interfaces refers to a local IP address so that it is recognized that packets which are directed directly to the MMN node are processed by a higher protocol level of the MMN node.

6. The method according to one or more of the preceding claims, wherein a source/sink-hardware-address-pair-to-interface entry for the MMN node is entered in the mesh forwarding table upon attachment of a mobile terminal device.

7. The method according to one or more of the preceding claims, wherein an MMN node with a gateway interface is maintained as a separately labeled gateway entry in the mesh forwarding table.

8. The method according to one or more of the preceding claims, wherein the interface assignment is further subdivided into neighbor MMN nodes that are directly reachable through the interface.

9. The method according to one or more of the preceding claims, wherein a broadcast address to interface assignment is additionally provided that governs handling of broadcast packets.

10. The method according to one or more of the preceding claims, wherein the entries in the mesh forwarding table are propagated in the network at the system start of an MMN node or when the mesh forwarding table is changed, such as by the attachment of a mobile terminal device.

11. The method according to one or more of the preceding claims, wherein the entries in the mesh forwarding table are processed by a routing algorithm and then the result of the routing algorithm is transmitted to further MMN nodes by means of a routing protocol.

12. MMN node that functions as a component of an IP transparent wireless multi-hop mesh network, "MMN," with mobility support and provides the wireless access for mobile terminal devices to the mesh network, comprising at least a network interface, a routing unit that performs the forwarding of packets on the basis of a mesh forwarding table,
wherein the mesh forwarding table is stored in a memory and is constructed both by means of a mesh routing protocol and by means of the association of terminal devices with the MMN node so that non-mesh-capable terminal devices can be integrated in the mesh network in an IP transparent manner, **characterized in that** the mesh forwarding table carries out a mapping of source/sink hardware address pairs onto the network interfaces of the MMN node and the address of the next hop so that it is possible to determine, based on the source/sink hardware address pairs, how the forwarding of the packets takes place.

13. The MMN node according to claim 12, wherein the addresses are layer-2 addresses, in particular MAC addresses.

14. The MMN node according to one or more of claims 12 and 13, wherein source/sink hardware address pairs in the mesh forwarding table can be extended through additional packet contents so that route distribution and/or load distribution can be optimized.

15. The MMN node according to one or more of claims 12 through 14, wherein means are present that record entries for the addresses of the local network interface in the mesh forwarding table after the MMN node has started.

16. The MMN node according to the preceding claim, wherein the source/sink hardware address pair assignment for the local interfaces refers to a local IP address so that the routing unit recognizes that packets which are directed directly to the MMN node are processed by a higher protocol level of the MMN node.

17. The MMN node according to one or more of claims 12 through 16, wherein a source/sink-hardware-address-pair-to-interface entry for the MMN node is entered in the mesh forwarding table upon attachment of a mobile terminal device.

18. The MMN node according to one or more of claims 12 through 17, wherein an MMN node with a gateway interface is maintained as a separately labeled gateway in the mesh forwarding table that permits an additional entry at source/sink hardware address pair assignment.

19. The MMN node according to one or more of claims 12 through 18, wherein the interface assignment is further subdivided in the memory into neighbor MMN nodes that are directly reachable through the interface.

20. The MMN node according to one or more of claims 12 through 19, wherein a broadcast address to interface assignment is additionally provided that governs handling of broadcast packets.

21. The MMN node according to one or more of claims 12 through 20, wherein the entries in the mesh forwarding table are propagated in the network at the system start of an MMN node or when the mesh forwarding table is changed, such as by the attachment of a mobile terminal device.

22. The MMN node according to one or more of claims 12 through 21, wherein the entries in the mesh forwarding table are processed by a routing algorithm and then the result of the routing algorithm is transmitted to further MMN nodes by means of a routing protocol.

## Revendications

1. Procédé de commande de réseaux maillés multi-sauts sans fil transparent IP, « MMN », avec support de mobilité, comprenant des noeuds MMN avec au moins une interface réseau par laquelle les noeuds peuvent communiquer entre eux et permettent à des terminaux mobiles l'accès sans fil au réseau maillé, l'acheminement IP transparent de paquets au-dessous de la couche réseau s'effectuant par un noeud MMN sur la base d'une table d'acheminement maillé (mesh forwarding table = MFT) ; la table d'acheminement maillé étant non seulement construite par un protocole de routage maillé mais aussi par l'association de terminaux au noeud MMN, de manière à permettre d'intégrer des terminaux sans connectivité maillée dans le réseau maillé en manière transparente IP, **caractérisé en ce que** la table d'acheminement maillé réalise un mappage de couples d'adresses matérielles source-destination vers les interfaces réseau du noeud MMN et vers l'adresse du saut suivant, de manière à permettre de déterminer, en fonction des couples d'adresses matérielles source-destination, de quelle manière doit s'effectuer l'acheminement des paquets.

2. Procédé selon la revendication précédente, dans lequel les adresses sont des adresses de couche 2, notamment des adresses MAC.

3. Procédé selon l'une ou plusieurs des revendications précédentes, dans lequel des couples d'adresses matérielles source-destination dans le tableau d'acheminement maillé sont aptes à être complétées par d'autres contenus de paquet de manière à permettre d'optimiser la répartition d'acheminement et/ou de charge.

4. Procédé selon l'une ou plusieurs des revendications précédentes, dans lequel la table d'acheminement maillé effectue, après le démarrage du noeud MMN, des entrées correspondant aux adresses des propres interfaces réseau dans la table d'acheminement maillé.

5. Procédé selon la revendication précédente, dans lequel l'affectation des couples d'adresses matérielles source-destination correspondant aux propres interfaces renvoie à une propre adresse IP de manière à reconnaître que des paquets, qui sont directement destinés au noeud MMN, sont traités par un niveau de protocole supérieur du noeud MMN.

6. Procédé selon l'une ou plusieurs des revendications précédentes, dans lequel une entrée de couples d'adresses matérielles source-destination-à-interfaces du noeud MMN est effectuée dans la table d'acheminement maillé lors de l'enregistrement d'un terminal mobile.

7. Procédé selon l'une ou plusieurs des revendications précédentes, dans lequel un noeud MMN avec une interface passerelle figure comme entrée passerelle marquée comme autonome dans la table d'acheminement maillé.

8. Procédé selon l'une ou plusieurs des revendications précédentes, dans lequel l'affectation de l'interface est encore une fois subdivisée en noeuds MMN voisins directement accessibles via l'interface.

9. Procédé selon l'une ou plusieurs des revendications précédentes, dans lequel une affectation d'adresse broadcast-à-interface est également prévue, qui règle un traitement de paquets broadcast.

10. Procédé selon l'une ou plusieurs des revendications précédentes, dans lequel les entrées de la table d'acheminement maillé sont propagées dans le réseau lors du démarrage système d'un noeud MMN ou lors de la modification de la table d'acheminement maillé telle que l'enregistrement d'un terminal mobile.

11. Procédé selon l'une ou plusieurs des revendications précédentes, dans lequel les entrées de la table d'acheminement maillé sont traitées par un algorithme de routage et le résultat de l'algorithme de routage est transmis via un protocole de routage à d'autres noeuds MMN.

12. Noeud MMN faisant partie intégrante d'un réseau maillé sans fil multi-sauts transparent IP « MMN » à support de mobilité et permettant l'accès sans fil de terminaux mobiles au réseau maillé, comprenant au moins une interface réseau, une unité de routage assurant l'acheminement de paquets sur la base d'une table d'acheminement maillé, la table d'acheminement maillé étant stockée dans une mémoire et construite non seulement par un protocole de routage maillé mais aussi par l'association de terminaux au noeud MMN, de manière à permettre d'intégrer des terminaux sans connectivité maillée dans le réseau maillé en manière transparente IP, **caractérisé en ce que** la table d'acheminement maillé réalise un mappage de couples d'adresses matérielles source-destination vers les interfaces réseau du noeud MMN et vers l'adresse du saut suivant, de manière à permettre de déterminer, en fonction des couples d'adresses matérielles source-destination, de quelle manière doit s'effectuer l'acheminement des paquets.

13. Noeud MMN selon la revendication 12, dans lequel les adresses sont des adresses de couche 2, notamment des adresses MAC.

14. Noeud MMN selon l'une ou plusieurs des revendications 12 et 13, dans lequel des couples d'adresses matérielles source-destination dans le tableau d'acheminement maillé sont aptes à être complétées par d'autres contenus de paquet de manière à permettre d'optimiser la répartition d'acheminement et/ou de charge.

15. Noeud MMN selon l'une ou plusieurs des revendications 12 à 14, dans lequel des moyens sont prévus pour effectuer des entrées correspondant aux adresses de la propre interface réseau dans la table d'acheminement maillé après le démarrage du noeud MMN.

16. Noeud MMN selon la revendication précédente, dans lequel l'affectation des couples d'adresses matérielles source-destination correspondant aux propres interfaces renvoie à une propre adresse IP de manière à reconnaître que des paquets, qui sont directement destinés au noeud MMN, sont traités par un niveau de protocole supérieur du noeud MMN.

17. Noeud MMN selon l'une ou plusieurs des revendications 12 à 16, dans lequel une entrée de couples d'adresses matérielles source-destination-à-interfaces du noeud MMN est effectuée dans la table d'acheminement maillé lors de l'enregistrement d'un terminal mobile.

18. Noeud MMN selon l'une ou plusieurs des revendications 12 à 17, dans lequel un noeud MMN avec une interface passerelle figure comme entrée passerelle marquée comme autonome dans la table d'acheminement maillé, qui permet d'éffectuer une entrée additionnelle lors de l'affectation des couples d'adresses matérielles source-destination.

19. Noeud MMN selon l'une ou plusieurs des revendications 12 à 18, dans lequel l'affectation des interfaces est encore une fois subdivisée, dans la mémoire, en noeuds MMN voisins directement accessible via l'interface.

20. Noeud MMN selon l'une ou plusieurs des revendications 12 à 19, dans lequel une affectation d'adresse broadcast-à-interface est également prévue, qui règle un traitement de paquets broadcast.

21. Noeud MMN selon l'une ou plusieurs des revendications 12 à 20, dans lequel les entrées de la table d'acheminement maillé sont propagées dans le réseau lors du démarrage système d'un noeud MMN ou lors de la modification de la table d'acheminement maillé telle que l'enregistrement d'un terminal mobile.

22. Noeud MMN selon l'une ou plusieurs des revendications 12 à 21, dans lequel les entrées de la table d'acheminement maillé sont traitées par un algorithme de routage et le résultat de l'algorithme de routage est transmis via un protocole de routage à d'autres noeuds MMN.
